# EUROPEAN PATENT SPECIFICATION

(11) **EP 0 500 907 B1**
(45) Date of publication and mention of the grant of the patent: **19.04.1995**
(21) Application number: 91917283.3
(22) Date of filing: 12.09.1991
(51) Int. Cl.: A01G 23/091

(54) **A cutting and sawing unit provided with a timber handling arrangement**
Schneide- und Sägeeinheit mit Holzhandhabungsanordnung
Scie-tronçonneuse avec système de manipulation de bois

(30) Priority: 17.09.1990 SE 9002974
(43) Date of publication of application: 02.09.1992
(73) Proprietor: JANSSON, Assar, S-761 62 Norttälje (SE)
(72) Inventor: JANSSON, Assar, S-761 62 Norttälje (SE)
(74) Representative: Baumbach, Thorkild
(86) International application number: SE9100606
(87) International publication number: WO9204822

(56) References cited:
- FI-B- 59 691
- SE-B- 454 040
- SE-B- 8 603 484
- Derwent's abstract No. M5139E/38, SU-880354, publ. week 8238 (SILAVA SCI PROD)

## Description

### TECHNICAL FIELD

The present invention relates to a cutting and/or sawing unit which is provided with a timber handling arrangement and which is intended to be fitted onto the free end of a working arm or crane arm of an off-road vehicle, and which comprises a rotary sawblade mounted on an engine or motor stand and fitted with knives which project out from a hub part of the rotary blade and which are intended to generate a cutting and/or sawing action, preferably in coaction with a toothed device mounted on the motor stand.

### BACKGROUND ART

The aforesaid clipping and/or sawing unit is a development of an earlier, less refined cutting unit of the kind described, for instance, in Swedish Patent Application No. 89103434-2. This known unit is provided with a saw blade which is mounted on a motor stand and fitted with two knives and is intended to rotate in the close proximity of a toothed device, thereby obtaining a cutting action between the knives and the cutting surfaces of the teeth on said device. This unit is able to cut everything from grass and thick-stalk plants to thickets and bushes, shrubs, having stem thickness of up to 5 cm.

However, thicket and bush vegetation which is to be cleaned and cleared will often contain slender trees which must be cut manually with the aid of some type of motor saw. With the intention of eliminating such manual work when cleaning areas of this nature, the number of knives on the saw blade of some cutting units has been increased so as to obtain a sawing action which will enable thicker stems to be cut. However, it is necessary to exercise caution when cutting or felling relatively thick stems, since if the cutting unit is brought against a stem too quickly, the stem is liable to be drawn in towards the centre of the saw blade and there wedge between a cutting knife and a cutting tooth, causing the blade to stop abruptly. In order to prevent wood which is too thick to be cut by the unit from being drawn into the cutting unit, there is described in Swedish Patent Application No. 9002286-4 a saw which is equipped with knives whose forward cutting edges are provided with stepped projections. A saw of this construction will not only prevent wood from being drawn into the cutting unit, but also has a lower power consumption than other units while being capable of cutting vegetation of stem thicknesses in the region of 15-20 cm. This extension of the working range of the unit to include trees which can be used in the manufacture of wood chips and wood pulp results in the need of a rational and effective method of recovering the coarser part of the wood when cleaning and thinning vegetation.

### DISCLOSURE OF THE INVENTION

The object of the present invention is to enable coarser and thicker vegetation to be handled in a rational and effective manner, preferably when cleaning and thinning vegetated areas. This object is achieved in accordance with the invention with a cutting and/or sawing unit having the characteristic features set forth in the following Claim.

### BRIEF DESCRIPTION OF THE DRAWINGS

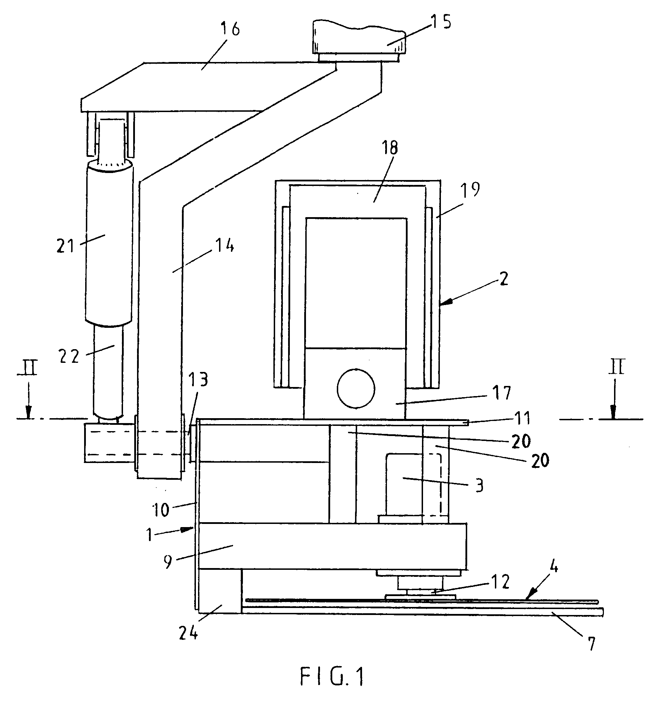

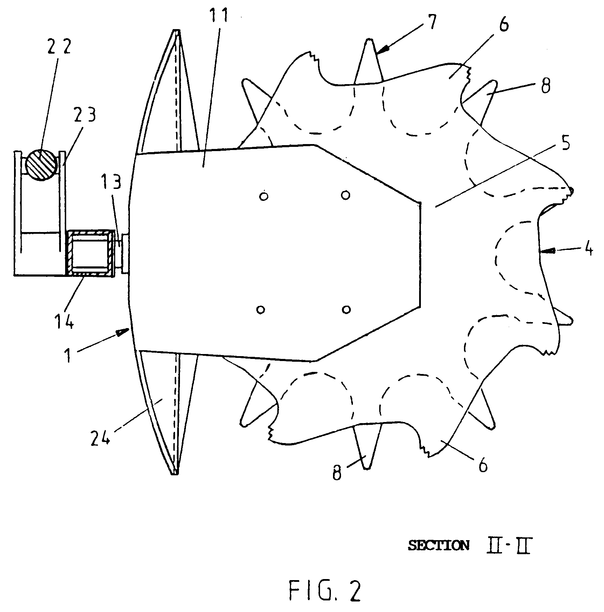

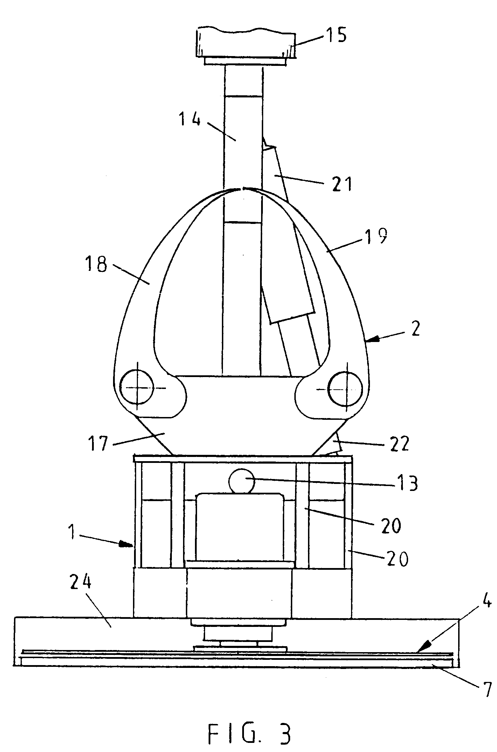

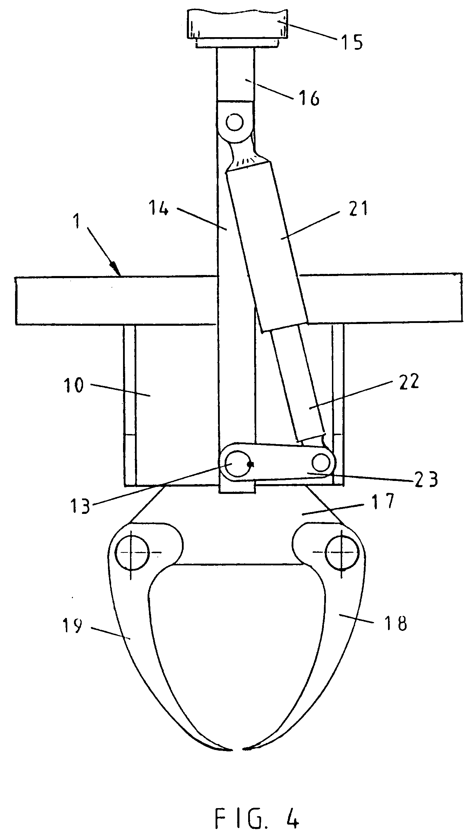

An exemplifying embodiment of a unit constructed in accordance with the invention will now be described in more detail with reference to the accompany drawings, in which Figure 1 is a side view of a link-suspended unit; Figure 2 is a sectional view of the unit and link taken through the line II-II in Figure 1; Figure 3 is a front view of the unit and link; and Figure 4 is a rear view of the unit and link. The requisite line for supplying working fluid to the hydraulic devices and for manoeuvering said devices have not been shown in the drawings.

### BEST MODE OF CARRYING OUT THE INVENTION

Figures 1 and 2 are respectively a side view and sectioned view of an inventive cutting and sawing unit which includes a motor stand 1 comprising a bottom plate (not shown) surrounded by a stiffening frame 9, a top plate 11, a back plate 10 which connects the bottom plate to the top plate 11, and four support legs 20. Mounted in the stand 1 is a hydraulic motor 3 whose shaft 12 carries a saw 4. The saw 4 includes a generally circular hub part 5 from which knives 6 provided with stepped, sawing cutting surfaces project, and is intended to rotate in the close proximity of the teeth 8 of a toothed device 7 which extends from a protective bar 24 fitted to the stand 1, thereby obtaining a cutting action in addition to a sawing action. Projecting out from the back plate of the stand 1 is a shaft 13 on which a link 14 is pivotally mounted, said link being connected to a working arm or jib (not shown) mounted on a vehicle through the medium of a rotator 15. Mounted on the top plate 11 of the stand 1 is a hydraulically operated gripper 2 which comprises a foundation 17 and gripping claws 18 and 19.

Figures 3 and 4 are respective front views and rear views of the unit and illustrate the two working positions to which the unit can be brought by rotating the shaft 13 journalled in the link 14. Thus, the unit can be moved from the cutting position shown in Figure 3 to the crane position shown in Figure 4, by means of a double-acting hydraulic piston-cylinder device 21, the piston rod 22 of which is affixed between an arm 16 which extends from the upper part of the link 14 and a lever arm 23 mounted on the suspension shaft 13. During transition from one working position to another, the lever arm 23 is caused to take an upwardly directed, neutral position, by retraction of the piston rod 22 into the cylinder 21. Depending on whether the gripping claws are latched outwardly or are brought together, it is possible to displace the gravitational centre point such as to cause the unit to tip over to either working position, in which the unit is then moved and locked by extending the piston rod 22. If, for some reason or other, the unit will not tip over to the desired working position, the protective bar 24 can be lowered onto the ground and the working arm or jib moved laterally so as to achieve transition to a desired working position.

The aforedescribed extension of the working range of the vegetation cleaning unit, primarily through the provision of new saw types and the present combination of the vegetation cleaning unit with a gripping device, has enabled the work of cleaning and thinning forest vegetation to be rationalized and made considerably more effective. When the inventive vegetation cleaning and timber handling unit is mounted on a logging crane, it is possible to carry out cleaning work alone and, in conjunction with said cleaning work, to rotate the unit to a crane position and to load a forwarder with that part of the felled wood which can be used in the manufacture of wood chips or wood pulp, without moving the forwarder. If the unit is mounted on a tractor or some other vehicle which is unable to accommodate such wood, the driver of the vehicle is able to collect or gather suitable wood within the working range of the crane into a single, readily accessible heap which can be later collected by a forwarder or some other vehicle, subsequent to completing a vegetation clearing operation and before moving the tractor or other vehicle.

It will be understood that the described and illustrated unit can be modified within the scope of the inventive concept. For example, the transition from one working position to another may be achieved by a rotator mounted on the link arm 16 adjacent the end part of the shaft 13.

## Claims

1. A cutting and/or sawing unit equipped for timber handling purposes and being of the kind which is intended to be mounted on the free end of a working arm or jib of an off-road vehicle, and including a saw (4) which is rotatably mounted on a motor stand (1) and which has a hub part (5) from which there extend knives (6) which are intended to generate a cutting and/or sawing action in coaction with a toothed device (7) mounted on the stand (1), **characterized** in that a gripping device (2) is mounted on the upper side (11) of the motor stand; in that the motor stand (1) is pivotally suspended from a shaft (13) which is journalled in a suspension link (14) in a plane which is preferably parallel with the plane of the saw (4); and in that the unit or alternatively the gripping device (2) can be brought to a working position directed towards the ground by rotating the motor stand (1) around the suspension shaft (13).

## Patentansprüche

1. Schneid- und/oder Sägeeinheit, die für Holzhandhabungszwecke ausgerüstet und am freien Ende eines Arbeitsarmes oder -auslegers eines Geländefahrzeuges befestigbar ist, mit einer Säge (4), welche in einem Motorgestell (1) drehbar befestigt ist und ein Nabenteil (5) mit von diesem vorstehenden Messern (6) aufweist, mit denen im Zusammenwirken mit einer am Gestell (1) befestigten, gezahnten Einrichtung (7) eine Schneid- und/oder Sägewirkung ausübbar ist, **dadurch gekennzeichnet**, daß eine Greifeinrichtung (2) auf der Oberseite (11) des Motorgestells befestigt ist, daß das Motorgestell (1) drehbar von einem Schaft (13) getragen ist, der in einer Aufhängestange (14) in einer vorzugsweise zur Ebene der Säge (4) parallelen Ebene gelagert ist, und daß die Einheit oder alternativ die Greifeinrichtung (2) durch Drehen des Motorgestells (1) um den Tragschaft (13) in eine zum Boden hin gerichtete Arbeitsstellung gebracht werden kann.

## Revendications

1. Bloc de coupe et/ou de sciage équipé pour des applications de manipulation de troncs d'arbres et du type destiné à être monté sur l'extrémité libre d'un bras ou flèche de travail d'un véhicule tout terrain, comprenant une scie (4) montée en rotation sur un socle de moteur (1) et comportant une partie de moyeu (5) d'où partent des couteaux (6) destinés à produire une action de coupe et/ou de sciage en coopération avec un dispositif denté (7) monté sur le socle (1), caractérisé en ce qu'un dispositif de prise (2) est monté sur le côté supérieur (11) du socle de moteur ; en ce que le socle de moteur (1) est suspendu en pivotement à un arbre (13) monté en rotation dans une liaison de suspension (14) dans un plan préférentiellement parallèle au plan de la scie (4) ; et en ce qu'on peut amener le bloc ou, en alternance, le dispositif de prise (2) dans une position de travail dirigée vers le sol, en faisant tourner le socle de moteur (1) autour de l'arbre de suspension (13).
